# EUROPEAN PATENT APPLICATION

(11) **EP 4 822 224 A1**
(43) Date of publication of application: **14.10.2026**
(21) Application number: 26168933.5
(22) Date of filing: 30.03.2026
(51) Int. Cl.: F16K 11/074, E03C 1/04, F16K 27/04

(54) **SHUT-OFF VALVE CATRIDGE FOR A SANITARY FITTING**

(30) Priority: 07.04.2025 DE 102025113618
(71) Applicant: ORAS OY, 26100 Rauma (FI)
(72) Inventor: Icking, Thomas, 26510 Rauma (FI); Kallio, Reima, 26100 Rauma (FI)
(74) Representative: Ostertag & Partner Patentanwälte mbB

(57) **Abstract**

A shut-off valve cartridge (32; 32') for a sanitary fitting (10) has a housing (48), a first port (36), a second port (38) and a third port (40). The three ports (36, 38, 40) can be connected to corresponding ports (222, 223, 224) formed in the sanitary fitting (10) and are separated by an equal angular distance of 120° so that the arrangement of the three ports (36, 38, 38) has a three-fold symmetry. The cartridge has a rotatable shaft (54) that can be connected to a handle (34) for manually operating the shut-off valve cartridge (32; 32'). A valve mechanism (42) is connected to the shaft (54) so that it can establish a waterway between the first port (36) to the second port (38) in a first angular position of the shaft (54), while it prevents water from passing between the first and second port in a second angular position of the shaft (54). According to the invention, the third port (40) is permanently blocked independent of the angular position of the shaft (54).

## Description

### BACKGROUND OF THE INVENTION

### 1. Field of the Invention

The invention relates to a shut-off valve cartridge for kitchen faucets or other types of sanitary fittings that are provided with an auxiliary outlet port which can be connected to a dishwasher or washing machine, for example.

### 2. Description of Related Prior Art

In Sweden, Finland and some other countries, connecting a dishwasher to the water supply is regulated by strict safety and plumbing standards to prevent water damage and ensure proper installation. Usually, a shut-off valve must be installed between the water supply pipe and the dishwasher inlet hose. The shut-off valve allows the water supply to the dishwasher to be manually shut-off when the dishwasher is not in use or when maintenance is required. This valve is sometimes located under the sink and near the water pipes. In some countries, it is recommended to use kitchen faucets that have a built-in shut-off valve.

Dishwashers are usually connected to the cold water supply. This allows the dishwasher to heat the water to the desired temperature. Some models can be connected to hot water. If the hot water comes from a district heating system or has been locally heated by solar or geothermal energy, a connection to the hot water supply may be more energy efficient because it requires less electricity.

Modern kitchen faucets with a built-in shut-off valve have a hot water inlet port, a cold water inlet port and an auxiliary outlet port that is connected to the dishwasher. The shut-off valve usually extends sideways from the body of the faucet and is attached to an interface that includes a hot water outlet port fluidly connected to the hot water inlet port, a cold water outlet port fluidly connected to the cold water inlet port, and an auxiliary inlet port that is connected, via the auxiliary outlet port, to the dishwasher.

Before the shut-off valve is installed, a decision must be made whether the dishwasher shall be connected to the cold water supply or to the hot water supply. For example, if a connection to the cold water supply is desired, the hot water outlet port of the interface must be blocked by inserting or attaching a plug. The cold water outlet port of the interface is then connected to the shut-off valve that establishes, if in a "open" position, a waterway to the auxiliary inlet port of the interface. In this position, cold water can flow from the cold water inlet port of the kitchen faucet to its cold water outlet port, from there via the interface through a water passage in the shut-off valve, and back into the body of the kitchen faucet via the auxiliary inlet port. In the "closed" position, the waterway in the shut-off valve is blocked such that no cold water can flow to the dishwasher.

One of the prior art shut-off valves has three ports that, when installed at the kitchen faucet, are connected to the three corresponding ports of the interface of the faucet. The three ports are arranged with three-fold symmetry, but projecting pins ensure that the valve cartridge can be fixed to the kitchen faucet in only one angular orientation. The unused water outlet port of the interface is blocked so that no water can enter the shut-off valve through the respective inlet port. The handle of the shut-off valve has three positions. In a central "closed" position, no water can flow through the shut-off valve. If the handle is turned to one side, the shut-off valve connects the cold water inlet to the auxiliary inlet port of the faucet, and if the handle is turned to the opposite side, the shut-off valve connects the hot water inlet to the auxiliary inlet port of the faucet.

However, there are certain drawbacks associated with this kind of shut-off valve. One problem is that it is sometimes difficult or at least cumbersome to block the unused water outlet at the faucet's interface. Another drawback is that in order to change from the "open" to the "closed" position, the handle must be turned into different directions depending on whether the shut-off valve is connected to the cold or the hot water supply. This can be confusing to persons that operate the valve, because usually shut-off valves are switched off by turning the handle counter-clockwise.

Similar considerations apply to shut-off valves that connect a bathroom faucet to a washing machine.

### SUMMARY OF THE INVENTION

It is therefore an object of the invention to provide a shut-off valve cartridge for a sanitary fitting provided with an auxiliary outlet port that is easier to install and operate.

This object is achieved, in accordance with the invention, by a shut-off valve cartridge for a sanitary fitting which comprises a cartridge housing, a first port, a second port and a third port, wherein the ports are configured to be connected to corresponding ports formed in the sanitary fitting and are separated by an equal angular distance of 120° so that the arrangement of the three ports has a three-fold symmetry. A rotatable shaft is configured to be connected to a handle for manually operating the shut-off valve cartridge. A valve mechanism is connected to the shaft and configured to establish a waterway between the first port to the second port in a first angular position of the shaft, and to prevent water from passing between the first port and the second port in a second angular position of the shaft that is different from the first angular position. The third port is permanently blocked independent of the angular position of the shaft.

The invention is based on the consideration that the installation of the shut-off valve cartridge is considerably simplified if it can be installed not only in one orientation like the prior art devices, but in two different angular orientations. This allows one of the three ports to be permanently blocked. The rationale behind this is that one of the two non-blocked ports can then be connected to the port of the sanitary faucet leading to the dishwasher, while the other one of the two non-blocked ports can be connected either to the port of the sanitary fitting that leads to the cold water supply, or to the port that leads to the hot water supply. The third port of the shut-off valve cartridge is then automatically connected to the port of the sanitary fitting that shall not be used for supplying water to the dishwasher. Since the third port is permanently blocked at the shut-off valve cartridge, it is not necessary to block the sanitary fitting's port that shall not be used for supplying water to the dishwasher, e.g. by manually inserting or attaching a plug. Instead, the blocking is automatically achieved once the shut-off valve cartridge is installed in the desired angular orientation.

Another advantage of the invention is that the ability to be installed in two different angular orientations makes it possible to shut-off the valve by turning the handle in the same direction irrespective of whether the dishwasher is connected to the cold or to the hot water supply. This helps to avoid operating errors.

In a preferred embodiment, the first angular position and the second angular position differ by an angle that is between 80° and 100°, preferably by an angle of 90°. This means that a person that desires to change between the "open" and the "shut" position (or vice versa), must turn the handle by (approximately) 90°. This results not only in a more intuitive operation, but enables a waterway with a larger diameter compared to valve mechanisms in which the first and second angular position differ by smaller angle, e.g. 60°. A waterway with a large diameter has the advantage that the shut-off valve can have smaller dimensions, which is beneficial in terms of manufacturing costs and which is usually also desired from a design perspective.

The are many different types of valve mechanism in the prior art that are suitable for the shut-off valve cartridge according to the invention. A preferred type of valve mechanism is one that comprises a fixed ceramic disk and a rotatable ceramic disk. The latter is connected in a torque-proof manner to the shaft and contacts the fixed ceramic disk. Each ceramic disk has two openings, wherein the two openings of the rotatable ceramic disk at least partially overlap the two openings of the fixed ceramic disk if the rotatable ceramic disk is in an "open" angular position, and wherein at least one of the two openings of the rotatable ceramic disk does not overlap any of the openings of the fixed ceramic disk if the rotatable ceramic disk is in a "closed" angular position. Valve mechanisms based on ceramic disks use an established technology and allows for cost-effective production and very low-maintenance operation over a long period of time.

The two openings of the fixed ceramic disk may be separated by an angular distance between 100° and 140°, preferably by an angular distance of 120°, with respect to an axis on which the rotatable shaft is centered. Such a design is particularly simple, because arrangement of the openings of the fixed ceramic disk simply reflects the arrangement of the ports.

However, if the openings are spaced approximately 120° apart, it almost impossible to change between the "open" and the "shut" position (or vice versa) by turning the shaft through by approximately 90°. Therefore, in a preferred embodiment, the two openings of the fixed ceramic disk are separated by an angular distance between 160° and 180°, preferably by an angular distance of 180°, with respect to an axis on which the rotatable shaft is centered. Then there it is possible to change between the "open" and the "shut" position (or vice versa) by turning the shaft by approximately 90°, and the above-mentioned advantages can be obtained. Namely, the openings can be larger, and therefore the dimensions of the shut-off valve can be smaller.

Since the three ports of the valve cartridge are separated by an equal angular distance of 120°, the cannels leading from the two unblocked ports to the fixed ceramic disk cannot be straight and parallel to the shaft axis, but must be curved or, if straight, not parallel to the shaft axis. Otherwise, the required transition from the 120° arrangement of the ports to the 90° arrangement of the openings in the fixed ceramic disk cannot be achieved.

Irrespective of how the openings are arranged on the fixed ceramic plate, the distance between the ports and the fixed ceramic plate may be bridged by a bottom plate that permanently blocks the third port. Such a bottom plate may either be an integral part of a single housing component of the cartridge, or it may be fixed to one or more other parts that commonly form the housing. The bottom plate has an interface side which is configured to face the sanitary fitting and on which the three ports are formed, and an interior side adjacent the fixed ceramic disk. This interior side has a first opening and a second opening at positions that are defined by the openings of the fixed ceramic disk.

If the bottom plate does not block the third port, this task can still be accomplished by the valve mechanism, e.g. by ceramic disks having suitable arrangements of openings.

In case the openings of the interior side of the bottom plate are separated by an angular distance between 160° and 180°, preferably by an angular distance of 180°, with respect to the axis on which the rotatable shaft is centered, the bottom plate may comprise a first curved channel connecting the first port to the first opening a second curved channel connecting the second port to the second opening. Curved channels usually have better hydrodynamic properties than straight channels that suddenly change direction. The shape of the channels can be similar to a small segment of a helix, but unlike a helix, the centers of the channels may change their distance from the shaft axis.

On the opposite side, the shut-off valve cartridge may comprise a channel member that is attached to the rotating disk and defines a U-turn channel having a 180° bend and providing a waterway between the two openings of the rotatable ceramic disk. In particular, the channel member is fixedly attached to the rotating disk such that it turns with the rotating disk. In principle, it would also be possible to use a ceramic disk that includes the U-turn channel. However, the manufacturing of such a disk is difficult and costly.

If the U-turn channel member is made of an elastic material, it may form a sealing to the rotatable ceramic disk so that no additional gasket is required. Furthermore, if the material forming the channel walls is elastic, this has advantages in terms of noise reduction, as it can help to absorb the sound of flowing water.

If the channel member is not made of an elastic material, a similar effect may be achieved by the provision of a silencing member that is distinct from the channel member and is made of an elastic material. The silencing member comprises a sealing ring forming a sealing to the rotatable disk, and a central portion having the shape of a saddle and forming an inner surface of the U-turn channel. It has turned out this inner surface makes the largest contribution to unwanted sounds, and therefore it often suffices to provide only this inner surface with elastic properties.

Preferably, each of the three ports is surrounded by a bottom sealing ring. These bottom sealing rings may form a single integrated bottom gasket. In principle, however, it is also possible to configure the three ports as tubes projecting from the bottom of the cartridge, and to provide such sealing rings only at the interface of the sanitary fitting. Furthermore, it is possible to provide the permanently blocked port of the shut-off valve cartridge by providing a sealing ring which has a closed central part. In this sense, the sealing ring of the permanently blocked port is shaped more like a disk. Within an integrated bottom gasket are therefore two openings and one closed part provided in a three-fold rotational symmetry.

In an embodiment, the shaft has a coupling portion configured to engage with a corresponding coupling counter-portion formed at the handle in twelve or more equidistant angular positions. Such a configuration is particularly advantageous if the first angular position and the second angular position differ by an angle that is between 80° and 100°, preferably by an angle of 90°. If the cartridge can be fixed to the sanitary fitting in two different angular orientations that differ by 120°, but is shall nevertheless be possible to orient the handle such that it is either horizontal or vertical in the two possible positions of the shut-off valve, there must be at least 12 handle positions differing by an angular spacing of 30°, because this is the largest common divisor of 90° and 120°.

In an embodiment, the shaft has an end portion configured to receive a recess formed in the handle, wherein the end portion has the shape of a cylinder supporting twelve or more equidistant ribs that extend parallel to an axis on which the rotatable shaft is centered. However, other configurations are contemplated as well. For example, the end portion of the shaft may have a recess into which the handle is inserted, or a kind of clutch is used that comprises two friction disks.

In another embodiment, the cartridge housing comprises an interface alignment element, in particular a pin or a recess arranged at the bottom plate, that is configured to cooperate with a counter-element provided at an interface of the sanitary fitting such that the shut-off valve cartridge can be attached to the interface of the sanitary fitting in only two different angular positions. Such an interface alignment element ensures an attachment of the shut-off valve to the sanitary fitting only in the two allowed angular orientations. In these allowed orientations, the third blocked port is either connected to the cold or to the hot water supply. The interface alignment element prevents, however, that the shut-off valve is attached to the sanitary fitting in a third orientation in which the blocked third port is connected to the dishwasher. Since the arrangement of the three ports at the cartridge has a three-fold symmetry, the ports as such could not achieve this, because the ports as such allow a connection to the sanitary fitting in all three angular orientations.

Subject of the present invention is also a sanitary fitting system, comprising a fitting housing, a hot water inlet port, a cold water inlet port and an auxiliary outlet to be connected to a dishwasher or washing machine, at least one water exit connected via a valve to at least one of the cold water inlet port and the hot water inlet port, and an interface comprising a hot water outlet port fluidly connected to the hot water inlet port, a cold water outlet port fluidly connected to the cold water inlet port, and an auxiliary inlet port connected to the auxiliary outlet port. The hot water outlet port, the cold water outlet port and the auxiliary inlet port are separated by an equal angular distance of 120° so that the interface has a three-fold symmetry. The system further comprises the shut-off valve cartridge described above. The interface and the shut-off valve cartridge are configured such that the shut-off valve cartridge can be fixed to the interface in two different angular orientations so that the first port of the shut-off valve cartridge is either connected to the hot water outlet port or to the cold water outlet port of the interface.

The cartridge housing may comprise an interface alignment element that is configured to cooperate with a counter-element provided at the interface of the sanitary fitting such that the shut-off valve cartridge can be attached to the interface of the sanitary fitting in only two different angular positions.

The sanitary fitting system may also comprising a handle that is configured to be connected to the rotatable shaft of the shut-off valve cartridge.

### BRIEF DESCRIPTION OF THE DRAWINGS

Various features and advantages of the present invention may be more readily understood with reference to the following detailed description taken in conjunction with the accompanying drawings in which:
- Figure 1: is a perspective view of a kitchen faucet supplying cold water to a dishwasher;
- Figure 2: is a circuit diagram illustrating all ports and valves included in the kitchen faucet shown in Figure 1;
- Figure 3: is the circuit diagram shown in Figure 2, but supplying hot water to the dishwasher;
- Figure 4: is a perspective view of a shut-off valve cartridge that is included in the kitchen faucet shown in Figure 1;
- Figures 5a and 5b: are bottom views of the valve cartridge shown in Figure 4 in two different angular orientations;
- Figure 6: is a perspective view on a portion of a faucet housing after removal of the shut-off valve so that the interface to the shut-off valve cartridge can be seen;
- Figure 7: is an enlarged view on the interface to the shut-off valve cartridge;
- Figures 8a and 8b: are plane longitudinal cross-sections of the valve cartridge in its "open" and its "closed" position, respectively;
- Figures 9a and 9b: are perspective longitudinal cross-sections of the valve cartridge in its "open" and its "closed" position, respectively;
- Figure 10: is a perspective view of the shut-off valve cartridge with a portion of the shaft and of the cup-shaped outer member cut away;
- Figure 11a and 11b: are perspective views showing a silencing member as an isolated part from the front and from the rear, respectively;
- Figures 12a and 12b: are schematic top views on a fixed ceramic disk and on a rotatable ceramic disk of the shut-off valve cartridge;
- Figures 13a and 13b: are schematic top views on a fixed ceramic disk and on a rotatable ceramic disk of a shut-off valve cartridge according to second embodiment;
- Figure 14: is a perspective longitudinal cross-section of the shut-off valve cartridge according to the second embodiment including the ceramic disks shown in Figures 13a and 13b;
- Figure 15: is a perspective view showing the silencing member of the shut-off valve cartridge shown in Figure 14 as an isolated part from the front; and
- Figure 16: is a perspective view of the shut-off valve cartridge according to the second embodiment with a portion of the shaft and of the cup-shaped outer member cut away.

### DESCRIPTION OF PREFERRED EMBODIMENTS

### 1. General setup

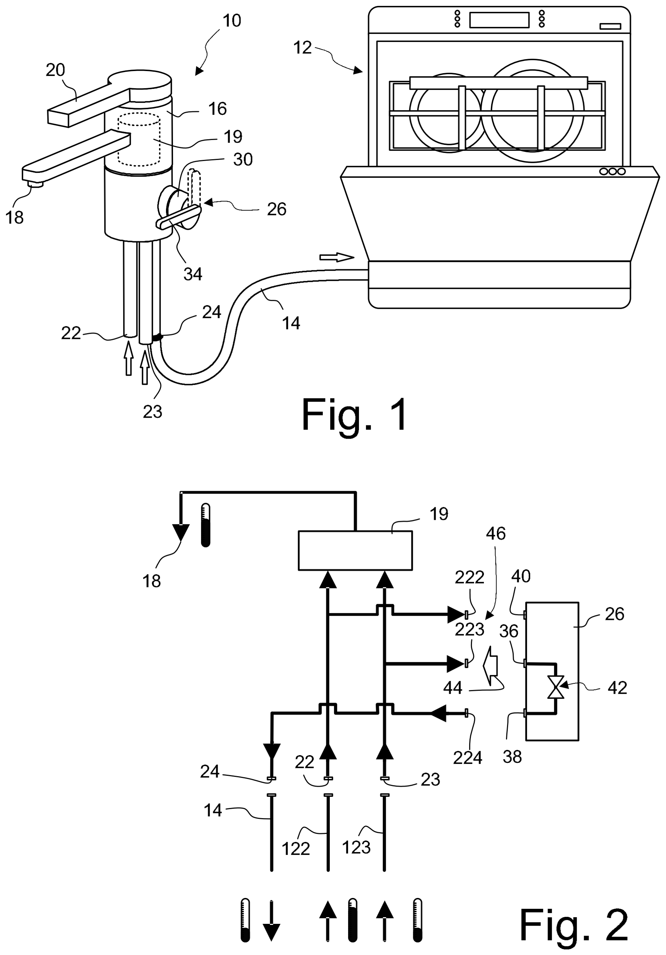

Figure 1 is a perspective view of a kitchen faucet 10 that is connected to a dishwasher 12 by a flexible hose 14. The kitchen faucet 10, which is shown without the sink on which it is mounted, has a faucet housing 16, a water exit 18 from which water can flow into the sink, and an operating lever 20 that actuates a mixing valve 19 arranged inside the faucet housing 16.

At its underside, the kitchen faucet 10 has a hot water inlet port 22, a cold water inlet port 23 and an auxiliary outlet 24 that is connected to the hose 14. The hot water inlet port 22 and the cold water inlet port 23 conduct water, via the mixing valve 19, to the water exit 18. The mixing valve 19 controls how much hot and/or cold water leaves the kitchen faucet 10 via the water exit 18.

The kitchen faucet 10 has a shut-off valve 26 that extends sideways from the main body of the faucet housing 16 and comprises a valve housing 30, a valve cartridge 32 (not shown in Figure 1) inside the valve housing 30, and a rotary handle 34 that is attached to a rotatable shaft of the valve cartridge 32. The shut-off valve 26 allows to shut the waterway between the kitchen faucet 10 and the dishwasher 12 by turning the rotary handle 34 from an "open" position shown in Figure 1 to a "closed" position indicated with broken lines.

Figure 2 is a circuit diagram that illustrates all ports and valves included in the kitchen faucet 10. Via suitable connectors (not shown), the hot water inlet port 22, the cold water inlet port 23 and the auxiliary outlet 24 are connected to a hot water supply 122, a cold water supply 123 and the hose 14 leading to the dishwasher 12, respectively. The various water temperatures are indicated by small thermometers in Figure 2.

In the configuration shown in Figure 2, the dishwasher 12 is connected - via the hose 14, the auxiliary outlet 24 and the shut-off valve 26 - to the cold water inlet port 23. It can be seen in Figure 2 that the shut-off valve 26 has a first port 36, a second port 38, a third port 40 and a valve mechanism 42 that establishes, if the shut-off valve 26 is in its "open" position, a waterway between the first port 36 and the second port 38.

An arrow 44 indicates that the shut-off valve 26 can be attached to an interface 46 that is formed at the main body of the kitchen faucet 10. The interface 46 has a hot water outlet port 222 fluidly connected to the hot water inlet port 122, a cold water outlet port 223 fluidly connected to the cold water inlet port 123, and an auxiliary inlet port 224 connected to the auxiliary outlet port 124.

In the "open" position of the shut-off valve 26, cold water coming from the cold water supply 123 via the cold water inlet port 23 passes the cold water outlet port 223 of the interface 45, enters the shut-off valve 26 via its first port 36, leaves the shut-off valve 26 via its second port 38, and enters the auxiliary inlet port 224 of the interface 45. From there, the cold water flows through the auxiliary outlet 26 and the hose 14 to the dishwasher 12.

By activating the valve mechanism 42 of the shut-off valve 26, the waterway inside the shut-off valve 26 can be blocked so that no cold water can flow to the dishwasher 12.

The third port 40 of the shut-off valve 26 is permanently blocked. Thus, hot water from the hot water supply 122 enters the shut-off valve 26 through the third port 40 that is in fluid communication with the hot water outlet port 222 of the interface 46, but is blocked inside the shut-off valve 26. As a result, the hot water cannot get to the dishwasher 12 irrespective of whether the shut-off valve 26 is in its "open" or "closed" position.

The hot water inlet port 22 and the cold water inlet port 23 are also connected to the mixing valve 19 that controls the flow of hot and cold water to the water exit 18, as this has been described further above with reference to Figure 1.

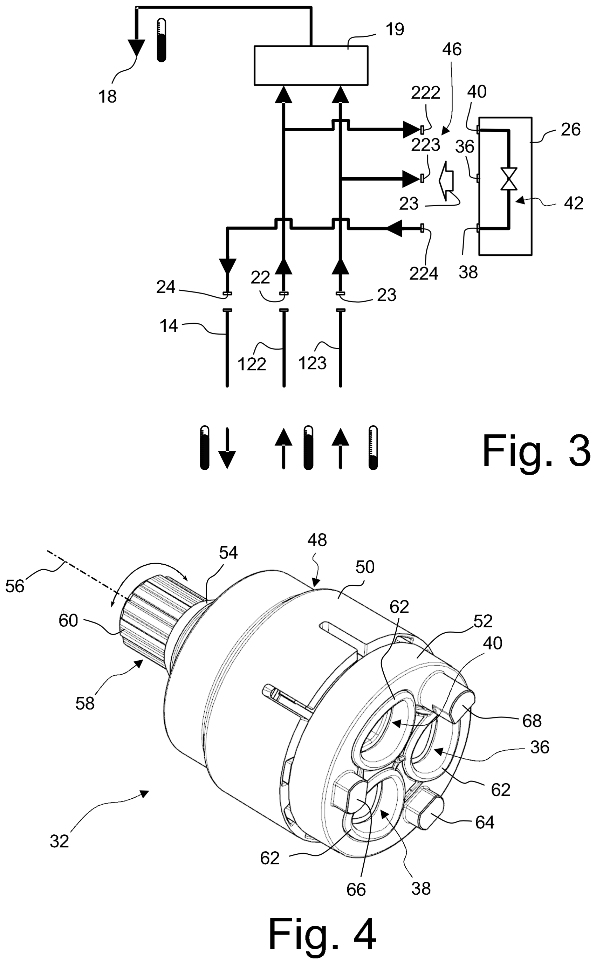

Some types of dishwashers 12 can be connected either to a cold water supply or to a hot water supply. Figure 3 illustrates a configuration in which the dishwasher 12 is connected, via the kitchen faucet 10, to the hot water supply 122. This may be advantageous if the hot water has been heated by solar or geothermal energy, for example. By attaching the cartridge 32 (not shown in Figure 3) of the shut-off valve 26 in a different angular orientation to the kitchen faucet 10, the first port 36 of the shut-off valve 26 is now connected to the hot water outlet port 222 of the interface 46, and the second port 38 is again connected to the auxiliary inlet port 224 of the interface 45. By operating the valve mechanism 42 of the shut-off valve 26 using the rotary handle 34, a waterway from the hot water supply to the dishwasher 12 can be established or interrupted as required.

Also in the configuration shown in Figure 3, the third port 40 of the shut-off valve 26 is permanently blocked. Thus, cold water from the cold water supply 123 enters the shut-off valve 26 through the third port 40 that is in fluid communication with the cold water outlet port 223 of the interface 46, but is blocked inside the shut-off valve 26. As a result, the cold water cannot get to the dishwasher 12 irrespective of whether the shut-off valve 26 is in its "open" or "closed" position.

### 2. Design of shut-off valve cartridge

Figure 4 is a perspective view of the shut-off valve cartridge 32 that performs the shut-off function explained above with reference to Figures 1 to 3.

The valve cartridge 32 has a cartridge housing 48 that includes a cup-shaped outer member 50 having a large opening on one side and a bottom plate 52 that is inserted into this opening. On its opposite side, the outer member 50 has a small opening through which a rotatable shaft 54 defining an axis 56 extends. The section of the shaft 54 extending through the small opening has a coupling portion 58 that is configured to engage with a corresponding coupling counter-portion formed at the rotary handle 26 in twelve equidistant angular positions. To this end, the coupling portion 58 has the shape of a cylinder that supports twelve ribs 60 extending parallel to the axis 56 on which the rotatable shaft 54 is centered. The rotary handle 26 has a recess (not shown) forming the counter-portion and having a shape complementary to the coupling portion 58. This allows the rotary handle 26 to be mounted on the shaft 54 in twelve different angular positions.

The bottom plate 52 has an interface side on which the three ports 36, 38, 40 are formed and which faces, once the valve cartridge 32 is installed, the interface 46 of the kitchen faucet 10. Each port 36, 38, 40 is surrounded by a buttom sealing ring 62 that is pressed, after installation of the valve cartridge 32, against a planar surface of the interface 46. Three pins 64, 66, 68 project from the bottom plate 52 and serve as interface alignment elements that cooperate with corresponding recesses at the interface 46 of the kitchen faucet 10 such that the valve cartridge 32 can be attached to the interface 46 in only two different angular positions, as this will explained in more detail further below.

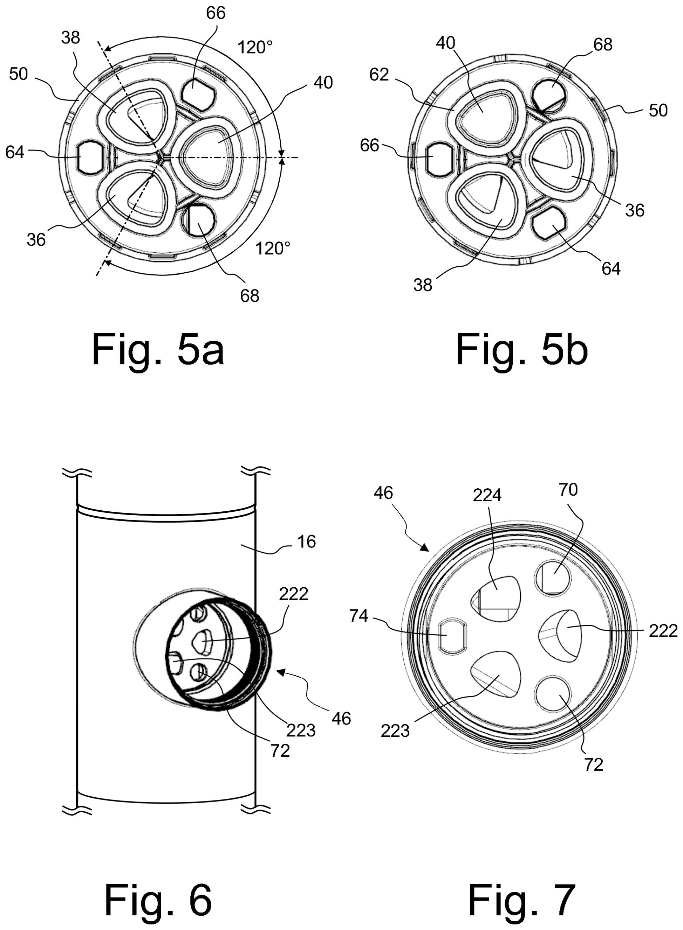

Figure 5a is a bottom view of the valve cartridge 32 shown in Figure 4. It can be seen that the three ports 36, 38, 40 on the bottom plate 52 are separated by an equal angular distance of 120° so that the arrangement of the three ports 36, 38, 40 has a three-fold symmetry. This implies that the valve cartridge 32 could - in the absence of the pins 64, 66, 68 - be mounted to the interface 46 in three different angular orientations.

Figure 5b differs from Figure 5a only in that the valve cartridge 32 has been rotated by 120° counterclockwise. The pins 64, 66, 68 are now shown at a different position.

Figure 6 is a perspective view on a portion of the faucet housing 16 after removal of the shut-off valve 26 so that the interface 46 can be seen, and Figure 7 is an enlarged view on the interface 46. The latter has three recesses 70, 72, 74 that cooperate with the pins 64, 66, 68. The third pin 68 has a portion having a circular cross-section, while the first and second pin 64, 66 each has a cross-section that can be described by removing at least one circular segment. The interface 46 cooperates with this in that the first and second recess 70, 72 each has a circular cross-section, while the third recess 74 has the same cross-section as the two pins 64, 66. As a result, the valve cartridge 32 can be mounted on the interface 46 in two angular positions. In one of these possible positions, the third pin 68 having the circular cross-section is inserted into the first recess 70, and in the other of the possible positions the third pin 68 having the circular cross-section is inserted into the second recess 72. However, the valve cartridge 32 cannot be mounted on the interface 46 in the remaining third angular position, because the third pin 68 having a circular cross-section cannot be inserted into the third recess 74 having a non-circular cross-section.

Figure 5a shows one of the two possible angular orientations of the valve cartridge 32 in which it can be installed on the interface 46. Here the third pin 68 is inserted into the second recess 72. In this orientation, the first port 36 of the valve cartridge 32 is connected to the hot water outlet port 222 of the interface, the second port 38 is connected to the auxiliary inlet port 224, and the blocked third port 40 is connected to the cold water outlet port 223. Consequently, this is the orientation that is used for connecting the dishwasher 12 to the hot water supply 122.

Figure 5b shows the other of the two possible angular orientations of the valve cartridge 32 in which it can be installed on the interface 46. Now the third pin 68 is inserted into first recess 70. In this orientation, the first port 36 of the valve cartridge 32 is connected to the auxiliary inlet port 224 of the interface, the second port 38 is connected to the cold water outlet port 223, and the blocked third port 40 is connected to the hot water outlet port 222. Thus, this is the orientation that is used for connecting the dishwasher 12 to the cold water supply 123.

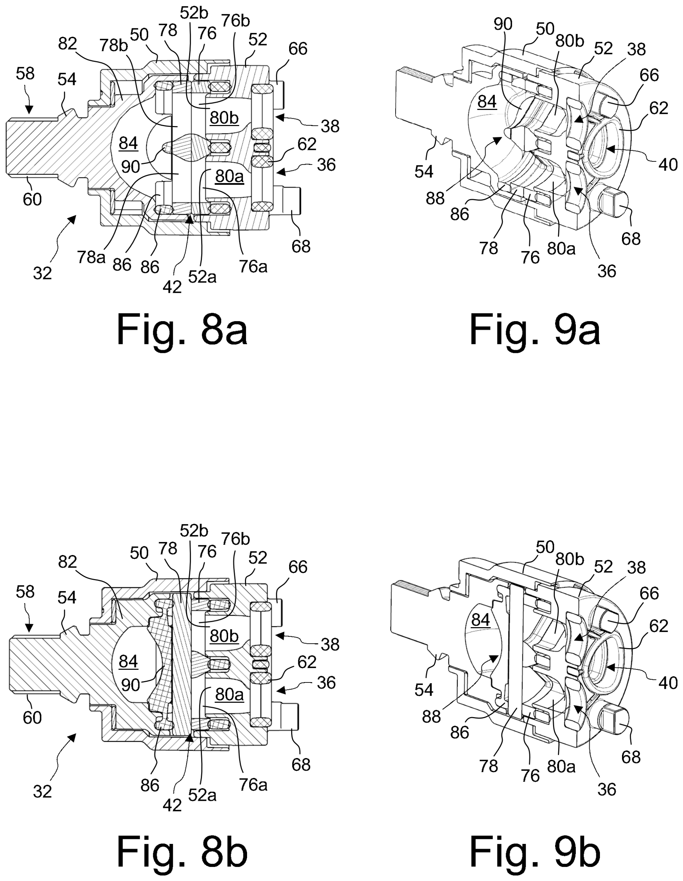

Figures 8a and 9a show the valve cartridge 32 in its "open" position in plane and perspective longitudinal cross-sections, respectively. In these cross-sections the valve mechanism 42 of the valve cartridge 32 can be seen. The valve mechanism 42 comprises a fixed ceramic disk 76 and a rotatable ceramic disk 78 that is connected in a torque-proof manner to the shaft 54 and contacts the fixed ceramic disk 76. The fixed ceramic disk 76 has two openings 76a and 76b, and the rotatable ceramic disk 78 has to openings 78a, 78b. In the "open" position shown in Figures 8a and 9a, the openings 76a and 78a are flush, and the openings 76b and 78b are also flush.

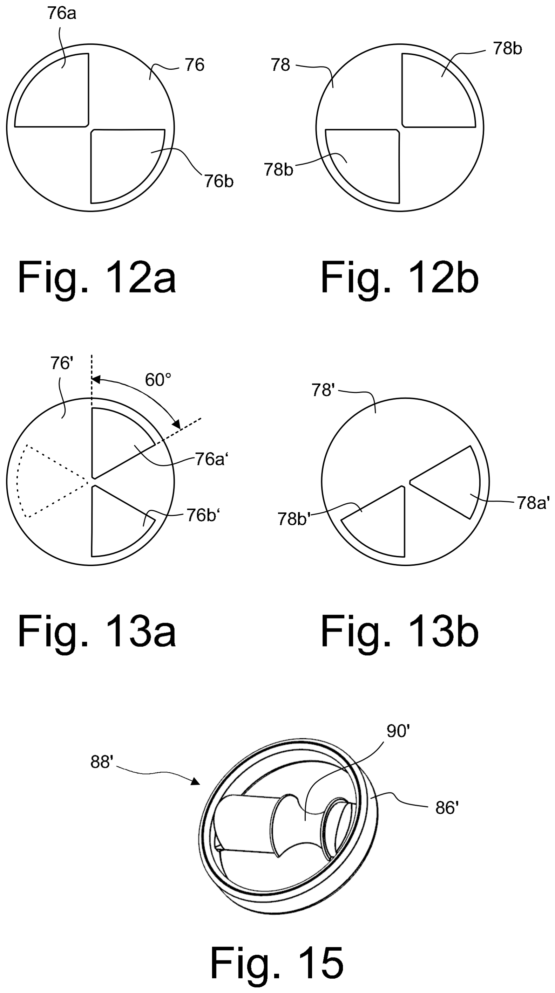

In the "closed" position of the valve cartridge 32 shown in Figures 8b and 9b, the openings 76a, 76b of the fixed ceramic disk 76 are not flush with any of the openings 78a, 78b of the rotatable ceramic disk 78. This "closed" position is obtained by turning the shaft 54 together with the rotatable ceramic disk 76 by 90°. Since the two openings 76a, 76b of the fixed ceramic disk 76 are separated by an angular distance of 180° with respect to the axis 56 on which the rotatable shaft 54 is centered (see Figure 12a), there is no overlap of the corresponding openings any more.

The bottom plate 52 has on its interior side adjacent the fixed ceramic disk 76 a first opening 52a and a second opening 52b at positions that correspond to the openings 76a, 76b of the fixed ceramic disk 76. Therefore, the openings 52a, 52b of the bottom plate at the interior side are also separated by an angular distance of 180° with respect to the axis 56. Since the two non-blocked ports 36, 38 are separated by an angular distance of 120°, channels 80a, 80b connecting the ports 36, 38 to the openings 52a, 52b cannot be straight and parallel to the axis 56. In the embodiment shown, these channels 80a, 80b are curved and similar to segments of a helix.

On a side opposite the bottom plate 52, the shut-off valve cartridge 32 comprises a channel member 82 that is fixedly attached to the rotating disk 78. The channel member 82 includes a U-turn channel 84 having a 180° bend and thus provides a waterway between the two openings 78a, 78b of the rotatable ceramic disk 78. In the embodiment shown, the channel member 82 is integrally formed with the shaft 54. In other embodiments, the channel member 82 is not integrally formed with the shaft 54, but is a separate component that is attached to the shaft 54 in a torque-proof manner.

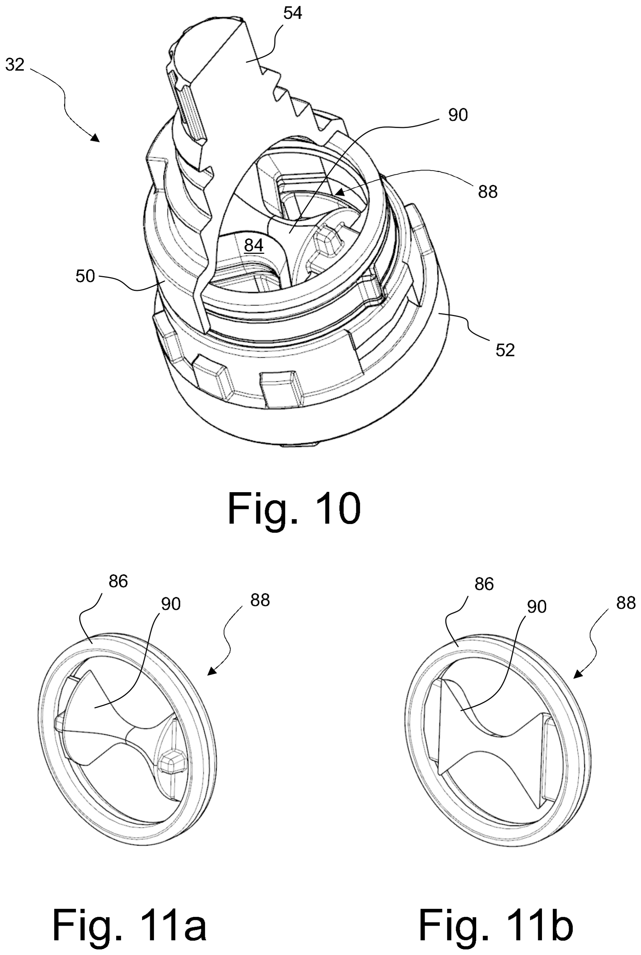

The shut-off valve cartridge 32 further comprises a silencing member 88 that is distinct from the channel member 82 and is made of an elastic material. The silencing member 88 comprises a sealing ring 86 forming a seal with the rotatable disk 78, and a central portion 90 which has the shape of a saddle and forms an inner surface of the U-turn channel 84. The silencing member 88 is best seen in Figure 10, which is a perspective view of the shut-off valve cartridge 32 with a portion of the shaft 54 and of the cup-shaped outer member 50 cut away, and in Figures 11a and 11b, which show the silencing member 88 as an isolated part in perspective views from the front and from the rear. The provision of such a silencing member is advantageous, because it has turned out that the inner surface of the U-turn channel 84, which is formed by the saddle-shaped central portion 90, makes the largest contribution to unwanted noise. By forming this inner surface of an elastic material, noise caused by water flowing through the narrow U-turn channel 84 can be significantly reduced.

In other embodiments, the entire channel member 82 is made of an elastic material which may be helpful to reduce noise still further.

In the "closed" position shown in Figures 8b and 9b the shaft 54, the channel member 82, the silencing member 88 and the rotatable disk 78 are turned, compared to Figures 8a and 9a, by 90° so that the openings 76s, 76b in the fixed disk 76 are not flush with the openings 78a, 78b in the rotatable disk 78.

Figures 12a and 12b are plane views of the fixed disk 76 and the rotatable disk 78 respectively. It can be seen that all opening 76a, 76b and 78a, 78b are identical in shape and as large as possible. This is important in order to obtain a high flow rate with minimum external dimensions of the shut-off valve cartridge 32. When the disks 76, 78 are in the rotational positions as shown in Figures 12a and 12b, there is a complete blockage so that no water can pass through the disks 76, 78, which corresponds to the "closed" position. When the rotary disk 78 is rotated through 90°, the openings 76a, 76b are flush with the openings 78a, 78b, which corresponds to the "open" position of the shut-off valve. With a view to minimizing the external dimensions of the shut-off valve cartridge 32, this is the preferred design. As mentioned above, this requires curved or non-parallel channels leading form the ports 36, 38, which are separated by an angular distance of 120°, to the openings 76a, 76b, which are separated by an angular distance of 90°.

### 3. Other embodiments

However, it is also contemplated to have straight channels running parallel to the axis 56. In this case, the openings 76a', 76b' of the fixed disk 76' and also the openings 78a', 78b' of the rotatable disk 78' must also be separated by an angular distance of 60°, as this is illustrated in Figures 13a and 13b. When the disks 76', 78' are in the rotational positions as shown in Figures 13a and 13b, there is a complete blockage so that no water can pass through the disks 76', 78', which corresponds to the "closed" position. When the rotary disk 78' is rotated through 60°, the openings 76a', 76b' are flush with the openings 78a', 78b', which corresponds to the "open" position of the shut-off valve.

By comparing Figures 12a and 12b with Figures 13a and 13b, it can be seen that with the same dimensions of the disks, the openings 76a', 76b' and 78a', 78b' shown in Figures 13a and 13b have smaller areas than the openings 76a, 76b and 78a, 78b shown in Figures 12a and 12b. Put differently, if the same flow rate shall be achieved, the arrangement shown in Figures 13a, 13b requires a shut-off valve cartridge 32 having larger external dimensions.

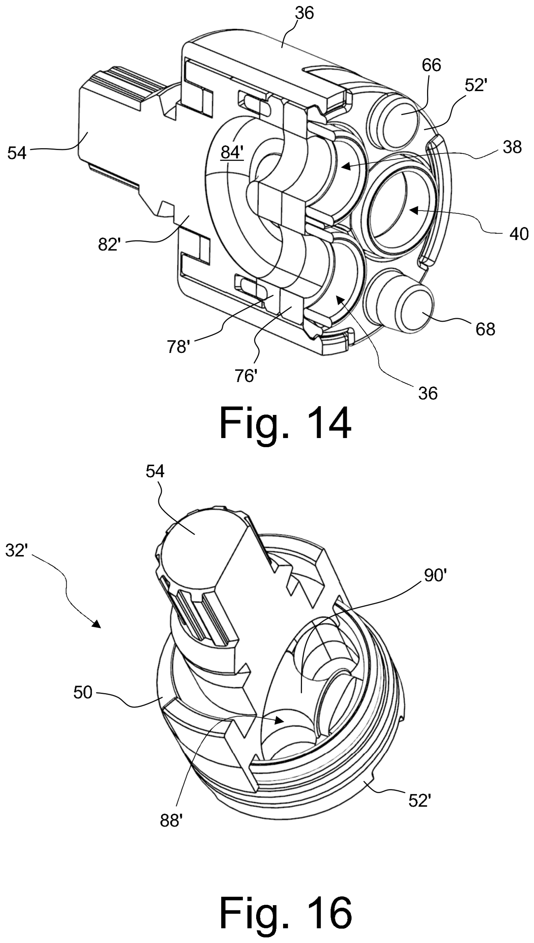

As mentioned above, in embodiments comprising disks 76', 78' as shown in Figures 13a and 13b, there is no need for curved channels 80a, 80b. This makes it possible to use a bottom disk 52' having a smaller axial thickness, as this can be seen by comparing Figure 9a and Figure 14, which shows the valve cartridge 32' in its "open" position in a perspective longitudinal cross-section similar to Figure 9a. However, the shorter axial length comes at the expense of a larger diameter of the valve cartridge 32.

It is noted that the section shown in Figure 14 does not include the axis 56, but is off-axis. As a result of this off-axis symmetry, also the central portion 90' of the silencing member 88' is not centered on the axis 56, but laterally offset, as this can be seen in the isolated perspective view of Figure 15 and the perspective view of Figure 16 that is similar to Figure 10. Those elements of the shut-off valve cartridge 32' that are at least substantially identical to the corresponding elements of the first embodiment are denoted with the same reference numeral, while elements having a different construction are designated with corresponding reference numerals supplemented by an apostrophe.

## Claims

1. A shut-off valve cartridge (32; 32') for a sanitary fitting (10), comprising:
a cartridge housing (48),
a first port (36), a second port (38) and a third port (40), wherein the three ports (36, 38, 40) are configured to be connected to corresponding ports (222, 223, 224) formed in the sanitary fitting (10) and are separated by an equal angular distance of 120° so that the arrangement of the three ports (36, 38, 38) has a three-fold symmetry,
a rotatable shaft (54) configured to be connected to a handle (34) for manually operating the shut-off valve cartridge (32; 32'), and
a valve mechanism (42) connected to the shaft (54) and configured to establish a waterway between the first port (36) to the second port (38) in a first angular position of the shaft (54), and to prevent water from passing between the first port (36) and the second port (38) in a second angular position of the shaft (54) that is different from the first angular position,
**characterized in that**
the third port (40) is permanently blocked independent of the angular position of the shaft (54).

2. The shut-off valve cartridge of claim 1, wherein the first angular position and the second angular position differ by an angle that is between 80° and 100°, preferably by an angle of 90°.

3. The shut-off valve cartridge of claim 1 or 2, wherein the valve mechanism (42) comprises a fixed ceramic disk (76; 76') and a rotatable ceramic disk (78; 78') that is connected in a torque-proof manner to the shaft (54) and contacts the fixed ceramic disk (76; 76'), wherein
each ceramic disk (76, 78; 76', 78') has two openings (76a, 76b, 78a, 78b; 76a', 76b', 78a', 78b'),
the two openings (78a, 78b; 78a', 78b') of the rotatable ceramic disk (78; 78') at least partially overlap the two openings (76a, 76b; 76a', 76b') of the fixed ceramic disk (76; 76') if the rotatable ceramic disk (78; 78') is in an "open" angular position, and wherein
at least one of the two openings (78a, 78b; 78a', 78b') of the rotatable ceramic disk (78; 78') does not overlap any of the openings (76a, 76b; 76a', 76b') of the fixed ceramic disk (76; 76') if the rotatable ceramic disk (78; 78') is in a "closed" angular position.

4. The shut-off valve cartridge of claim 3, wherein the two openings (76a', 76b') of the fixed ceramic disk (76') are separated by an angular distance between 100° and 140°, preferably by an angular distance of 120°, with respect to an axis (56) on which the rotatable shaft (54) is centered.

5. The shut-off valve cartridge of claim 3, wherein the two openings (76a, 76b) of the fixed ceramic disk (76) are separated by an angular distance between 160° and 180°, preferably by an angular distance of 180°, with respect to an axis (56) on which the rotatable shaft (54) is centered.

6. The shut-off valve cartridge of claim 4 or 5, wherein the housing (48) comprises a bottom plate (52; 52') which permanently blocks the third port (40) and has
an interface side which is configured to face the sanitary fitting and on which the three ports (36, 68, 40) are formed, and
an interior side adjacent the fixed ceramic disk (76), wherein the interior side of the bottom plate (52; 52') has a first opening (52a) and a second opening (52b) at positions that are defined by the openings (76a, 76b; 76a', 76b') of the fixed ceramic disk (76; 76').

7. The shut-off valve cartridge of claim 6, wherein the openings (52a, 52b) of the interior side of the bottom plate (52) are separated by an angular distance between 160° and 180°, preferably by an angular distance of 180°, with respect to the axis (56) on which the rotatable shaft (54) is centered, and wherein the bottom plate (52) comprises a first curved channel (80a) connecting the first port (36) to the first opening (52a) a second curved channel (80b) connecting the second port (38) to the second opening (52b).

8. The shut-off valve cartridge of any of claims 3 to 7, comprising a channel member (82; 82') that is attached to the rotating disk and defines a U-turn channel (84; 84') having a 180° bend and providing a waterway between the two openings (78a, 78b; 78a', 78b') of the rotatable ceramic disk (78; 78').

9. The shut-off valve cartridge of claim 8, comprising a silencing member (88; 88') that is distinct from the channel member (82) and is made of an elastic material, wherein the silencing member (88; 88') comprises
a sealing ring (86; 86') forming a sealing to the rotatable disk (78, 78'), and
a central portion (90; 90') having the shape of a saddle and forming an inner surface of the U-turn channel (84; 84').

10. The shut-off valve cartridge of any of the preceding claims, wherein each of the three ports (36, 38, 40) is surrounded by a bottom sealing ring (62).

11. The shut-off valve cartridge of any of the preceding claims, wherein the shaft (54) has a coupling portion (58) configured to engage with a corresponding coupling counter-portion formed at the handle (34) in twelve or more equidistant angular positions.

12. A sanitary fitting system, comprising
a fitting housing (30),
a hot water inlet port (22), a cold water inlet port (23) and an auxiliary outlet port (24) to be connected to a dishwasher (12) or a washing machine,
at least one water exit (18) connected via a valve (19) to at least one of the cold water inlet port (23) and the hot water inlet port (22),
an interface (46) comprising
a hot water outlet port (222) fluidly connected to the hot water inlet port (22),
a cold water outlet port (223) fluidly connected to the cold water inlet port (23), and
an auxiliary inlet port (224) connected to the auxiliary outlet port (24),
wherein the hot water outlet port (222), the cold water outlet (223) port and the auxiliary inlet port (224) are separated by an equal angular distance of 120° so that the interface has (46) a three-fold symmetry,
**characterized in that**
the system comprises the shut-off valve cartridge (32; 32') of any of claims 1 to 11, and **in that**
the interface (46) and the shut-off valve cartridge (32; 32') are configured such that the shut-off valve cartridge (32; 32') can be fixed to the interface (46) in two different angular orientations so that the first port (36) of the shut-off valve cartridge (32; 32') is either connected to the hot water outlet port (222) or to the cold water outlet port (223) of the interface (46).

13. The sanitary fitting system of claim 12, wherein the cartridge housing (48) comprises an interface alignment element (68) that is configured to cooperate with a counter-element (70, 72) provided at the interface (46) of the sanitary fitting such that the shut-off valve cartridge (32; 32') can be attached to the interface (42) of the sanitary fitting in only two different angular positions.
